# EUROPEAN PATENT SPECIFICATION

(11) **EP 1 522 682 B1**
(45) Date of publication and mention of the grant of the patent: **05.10.2011**
(21) Application number: 03022493.5
(22) Date of filing: 09.10.2003
(51) Int. Cl.: F01L 1/02, F16H 7/18, F01P 5/10, F02F 7/00

(54) **A camshaft drive assembly and a case and a chain guide for a camshaft drive assembly**
Eine Nockenwellenbetätigungsvorrichtung und ein Gehäuse und eine Kette für eine Nockenwellenbetätigungsvorrichtung
Dispositif de commande d'arbre à cames et boite et chaine pour dispositif de commande d'arbre à cames

(43) Date of publication of application: 13.04.2005
(73) Proprietor: Volvo Car Corporation, 405 31 Göteborg (SE)
(72) Inventor: Zarowiecki, Andrzej, 423 47 Torslanda (SE)
(74) Representative: Börlin, Maria

(56) References cited:
- EP-A- 1 099 827
- DE-C- 19 955 894
- US-A- 4 607 601
- US-A- 5 193 498
- US-A- 5 279 265
- US-A- 5 355 847
- US-A- 5 503 117
- US-A- 6 135 066
- US-B1- 6 322 471
- US-B1- 6 383 103
- US-B1- 6 609 987

## Description

### TECHNICAL FIELD

The present invention relates to a camshaft drive assembly, a case for a camshaft drive assembly, and a chain guide for a camshaft drive assembly.

### TECHNICAL BACKGROUND

Regarding timing gear systems for combustion engines, it is desirable to reduce production time consumed by preparing parts of the systems and assembling the systems onto the engines.

US4607601 describes a timing gear cassette unit, with sprocket wheels and a timing chain arranged in a housing forming a unit that is separable from the engine. However, the timing gear cassette unit in US4607601 does not have timing chain guides between the sprocket wheels for controlling the movement of the chain.

Document EP 1 099 827 shows a chain guide for a camshaft drive assembly.

Camshaft drive assemblies, also referred to as timing gear drive assemblies, with chain guides are known in the art. However, mounting of such guides adds to the production time of the assembly, e.g. by requiring positioning and bolting of the guides.

### SUMMARY

It is an object of the invention to decrease production time involved regarding timing gear systems for combustion engines.

This object is reached by a camshaft drive assembly comprising a case, wherein at least one chain guide support for at least one chain guide for a timing chain is formed integrally with the case.

The object is also reached with a case for a camshaft drive assembly, wherein at least one chain guide support for at least one chain guide for a timing chain is formed integrally with the case.

The chain guide support, or the chain guide supports, being formed integrally with the case results in the assembly comprising less parts, which facilitates production of the assembly. The chain guide support, or the chain guide supports, being formed integrally with the case also results in less parts having to be assembled before or during the implementation of the assembly into the combustion engine, which facilitates production. Also, the chain guide support, or the chain guide supports, being formed integrally with the case will have a stiffening effect on the case, and will contribute to an improved NVH (Noise, Vibration and Harshness) behavior of the engine.

Preferably the camshaft drive assembly comprises at least one chain guide, mounted onto one of the chain guide supports with a snapping measure. This embodiment of the invention provides for a quick snap-on step for mounting the chain guide. Thereby, production of the chain guide assembly is facilitated, since no bolting or other time consuming mounting procedure is required to fasten the chain guide to the assembly.

Preferably, the camshaft drive assembly comprises at least one chain guide, presenting a chain guide surface and a support surface, the support surface facing one of the at least one chain guide support, whereby, the chain guide surface, as seen in a cross-section perpendicular to the longitudinal direction of the timing chain, is oriented in an angle in relation to the support surface. Thereby, where the case is produced by a casting process resulting in draft angles of inner surfaces of the case due to tool removal requirements during the casting process, a non-angled chain guide surface can be accomplished by the angle between the chain guide surface and the support surface compensating for the draft angle of the case. As a result, no machining is required on the case to form a non-angled chain guide support.

Preferably, a part of a water pump is formed integrally with the case. This, as opposed to supplying the water pump housing separately, provides for less parts having to be manufactured for an engine system. It also makes the assembly procedure of the engine system easier, since at least a part of the water pump housing can be assembled with other engine components at the same production stage as assembling of the camshaft drive case with other engine components.

Preferably, at least a part of at least one reservoir for oil for a hydraulic actuation mechanism of a chain tensioning device is formed integrally with the case. This, as opposed to supplying the oil reservoir separately, provides for less parts having to be manufactured for an engine system. It also makes the assembly procedure of the engine system easier, since at least a part of the oil reservoir can be assembled with other engine components at the same production stage as assembling of the camshaft drive case with other engine components.

The object is also reached with a chain guide adapted to be mounted in a camshaft drive assembly, the chain guide having an extended shape, and presenting a chain guide surface and a support surface, the support surface facing, in a mounted condition of the chain guide, a chain guide support formed integrally with a case of the camshaft drive assembly, whereby the chain guide surface, as seen in a cross-section of the chain guide, is oriented in an angle in relation to the support surface.

The object is also reached with a chain guide adapted to be mounted in a camshaft drive assembly, the chain guide being adapted to be mounted with a snapping measure onto a chain guide support formed integrally with a case of the camshaft drive assembly.

### BRIEF DESCRIPTION OF DRAWINGS

Below, the invention will be described in greater detail with reference to the drawings, in which:
- fig. 1 shows a perspective view of a camshaft drive assembly according to one embodiment of the present invention, and shows a side of the assembly which will face away from an engine in the mounted condition of the assembly,
- fig. 2 shows, from the same viewpoint as fig. 1, parts of the assembly in fig. 1, in their respective relative positions in the assembly,
- fig. 3 shows, from the same viewpoint as fig. 1, a case of the assembly in fig. 1,
- fig. 4 shows a perspective view of a sectioned part of the case in fig. 3 and a part of a chain guide, the section being oriented as indicated by the line IV-IV in Fig. 3,
- fig. 5 shows a perspective view of the case in fig. 3, and shows a side of the case which will face towards the engine in the mounted condition of the camshaft drive assembly, and
- fig. 6 shows a perspective view of a camshaft drive assembly according to an alternative embodiment of the present invention, and shows a side of the assembly which will face away from an engine in the mounted condition of the assembly.

### DETAILED DESCRIPTION

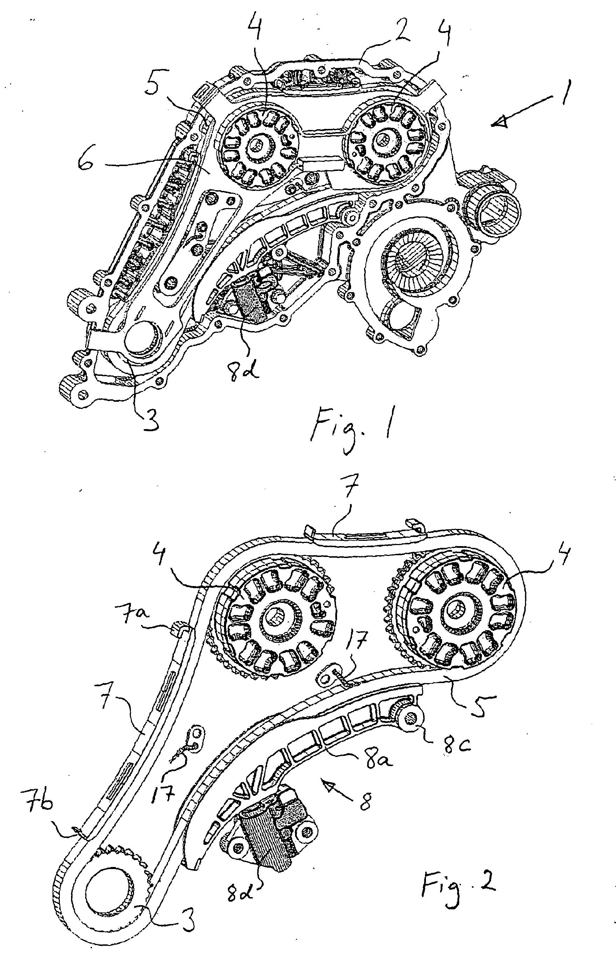

Fig. 1 shows a camshaft drive assembly 1 comprising a case 2, a drive sprocket 3, two cam sprockets 4 and a timing chain 5, whereby the drive sprocket 3, the cam sprockets 4, and the timing chain 5 are arranged in the case 2. The case can be made of any suitable material, e.g. aluminium, an aluminium alloy, magnesium, a magnesium alloy or fiber reinforced plastics, preferably with a high fiber content. As can be seen in fig. 2, the drive sprocket 3 and the cam sprockets 4 are connected via the timing chain 5. Here, the word "chain" refers to any suitable endless transmission member, including a linked chain, a single or multiple roller chain, a silent chain, or even a belt.

The assembly shown in fig. 1 is suited for transportation, e.g. from a camshaft drive assembly plant to an engine plant. Thereby, the case 2 has the function of a carrier for other camshaft drive parts, including the sprockets 3, 4, and the timing chain 5. A fixture 6, suitably in a plastic material, is provided and engages the sprockets 3, 4 to keep the sprockets and the timing chain fixed during transportation and assembly to the engine. Fig. 1 shows a side of the assembly, which, when mounted on an engine, faces away from the engine (not shown). When mounted the fixture 6 positions the sprockets 3, 4 correctly in relation to a crankshaft and camshafts on the engine. When the assembly is placed on the engine with each shaft extending through the respective sprocket, the case is secured to the engine block by means of bolts through mounting holes provided in the case, and the fixture 6 can be removed. A case cover (not shown) is mounted on the case 2, and the case 2 is further secured together with the cover to the engine block by means of additional bolts through additional mounting holes. Thereby, case fixing bolts are accessible with all chain system components in position.

Referring to fig. 2, the camshaft drive assembly comprises two chain guides 7, and a chain tensioning device 8. Within the scope of the invention, the camshaft drive assembly can comprise any number of chain guides. In, this example, with two cam sprockets 4, two chain guides 7 are provided, each between two sprockets, and the chain tensioning device 8 also has a chain guiding function. In a case with only one camshaft, and therefore only two sprockets in the assembly, only one chain guide could be provided together with a chain tensioning device. Also, it is possible to have more than one chain guide between two sprockets.

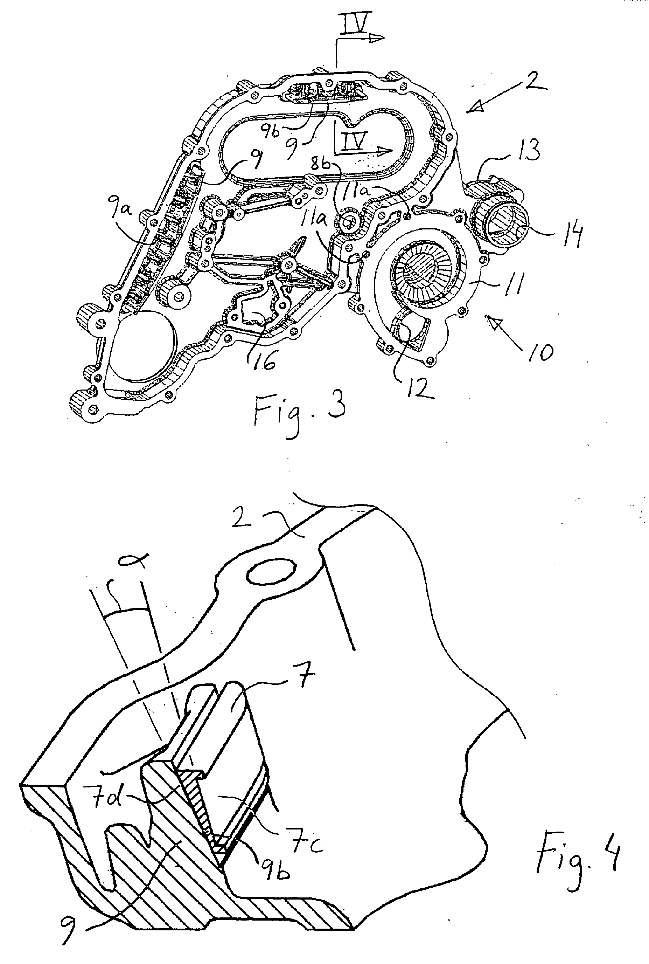

As can be seen in fig. 3, a chain guide support 9 is provided for each chain guide, and formed integrally with the case 2. The chain guide supports 9 extend close to and substantially along edges of the case 2, and each of them presents transverse ribs extending towards the edge of the case 2. The chain guide supports 9, specially when presented as in this embodiment, provides a stiffening effect on the case 2.

As can be seen in fig. 2, in this embodiment, the chain guides 7 have an extended shape, although other shapes are conceivable within the scope of the invention. Each chain guide is provided with a fastening arrangement including a hook 7a at one end, and a stud 7b at the other end, the stud 7b being provided with a protrusion engagable with a corresponding cavity in the corresponding chain guide support 9. Thus, the chain guide 7 can be snapped onto the chain guide support 9 by engagement of the hook 7a with one end of the chain guide support 9, and a snapping engagement of the stud 7b in the cavity at the other end of the chain guide support 9.

As can be seen in fig. 4, and each chain guide 7 presents a chain guide surface 7c and a support surface 7d, the support surface 7d facing the corresponding chain guide support 9. The chain guide surface 7c is oriented in a small angle α in relation to the support surface 7d, the angle being indicated in fig. 4. The support surface 7d is, in the assembled state of the chain drive, abutting an outer surface 9b of the respective chain guide support 9. Preferably, the case 2 is made in a casting process using a suitable material such as aluminum, magnesium or fiber reinforced plastics. Due to tool removal requirements during the casting process of the case 2, e.g. to enable a casting tool to be removed without damaging the tool or the case, the outer surfaces 9b of the chain guide supports 9 are, as well as other surfaces in the interior of the case, oriented in a small angle α to a direction perpendicular to the plane in which the timing chain 5 extends in the assembled state of the camshaft drive. Typically, the angle α is 1-3 degrees. By the chain guide surface 7c being oriented in substantially the same small angle α in relation to the support surface 7d, the chain guide surface 7c will correspond to the chain orientation by being oriented perpendicular to the plane in which the timing chain 5 extends in the assembled state of the camshaft drive assembly.

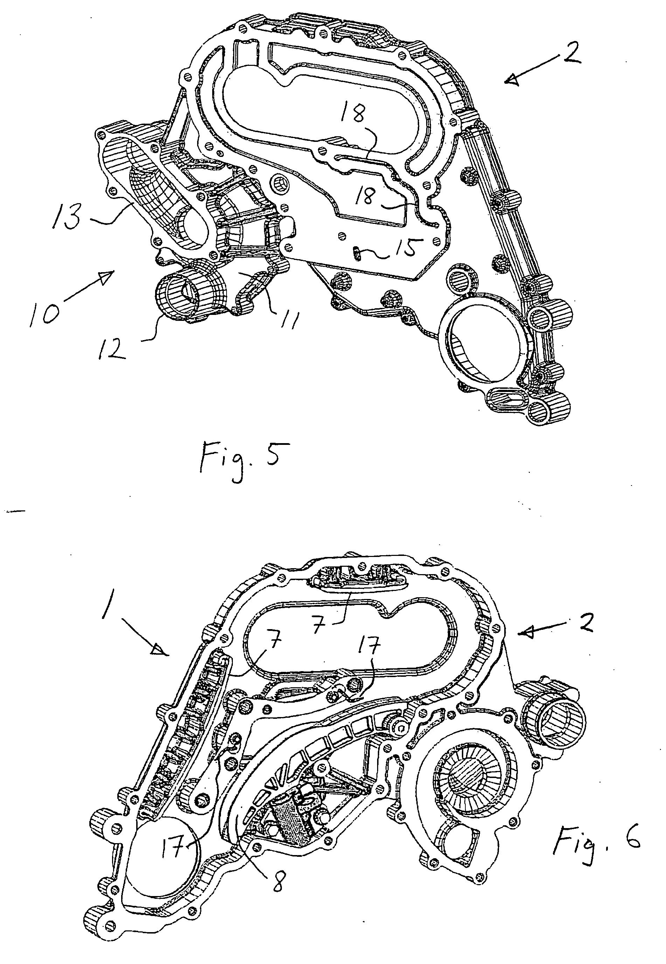

Fig. 5 shows the case 2 with the side thereof facing the engine in the mounted condition of the assembly. Referring to fig. 3 and 5, a part 10 of a water pump is formed integrally with the case 2. In this embodiment, the part 10 formed integrally with the case 2 comprises a part 11 of a volute for the water pump, with a water pump outlet 12, and a part 13 of an inlet channel for the water pump, with a feed opening 14. Alternatively, the case 2 can be formed without the part 13 of the inlet channel for the water pump. Referring to fig. 3, during engine assembly, a mating part (not shown) of the volute, with an impeller (not shown), is mounted to the integrated part 11 of the volute, by bolts through volute assembly holes 11a. As an alternative, the mating part of the volute with the impeller can integrated in the camshaft drive assembly 1 before transportation to the engine plant. Referring to fig. 5, an inlet channel cover (not shown) is mounted at engine assembly to the integrated part 13 of the inlet channel.

Referring to fig. 2, the chain tensioning device 8 comprises a tensioner arm 8a, which preferably is pivotably mounted to the case 2 at a tensioner arm mounting hole 8b (fig. 3) by a pivot bush 8c. For actuation of the tensioner arm 8a a hydraulic actuation mechanism 8d is bolted to the case 2 and provided with a piston acting by hydraulic pressure on the tensioner arm 8a. Oil for the hydraulic actuation mechanism 8d is provided from the engine cylinder head via an oil channel 15 integrated with the case 2, see fig. 5. The oil channel 15 is communicating with an oil reservoir for the hydraulic actuation mechanism 8d. As can be seen in fig. 3, a part 16 of the oil reservoir for the hydraulic actuation mechanism 8d is formed integrally with the case 2. A mating part of the oil reservoir is provided on the hydraulic actuation mechanism 8d.

Referring to fig. 2, the camshaft drive assembly 1 comprises two oil jets 17, mounted on the case 2, for lubrication of the mechanism of the assembly. The oil jets 17 are fed from the engine cylinder head via oil channels 18 integrated in the case, see fig. 5. The oil channels 18 can be accomplished partly by suitable forming of the casting tool for the case 2, and partly by drilling.

Fig. 6 shows a camshaft drive assembly 1 according to an alternative embodiment of the invention. As in the assembly describe above, the assembly in fig. 6 includes a case 2, two chain guides 7, a chain tensioning device 8 and oil jets 17. The case 2 is similar to the one in the embodiment described above. Differing from the embodiment described above, the camshaft drive assembly 1 in fig. 6 does not comprise sprockets and a timing chain. Compared to the embodiment described above, the camshaft drive assembly 1 in fig. 6 can be seen as an alternative, lower lever pre-assembly, that is suitable for transportation to an engine plant, where sprockets and timing chain have to be integrated in the camshaft drive mechanism.

The assembly according to the invention can, of course, be equipped with only one cam sprocket for engines with only one camshaft.

## Claims

1. A camshaft drive assembly comprising a case (2) and at least one chain guide support (9) for at least one chain guide (7) for a timing chain (5), which chain guide support (9) is formed integrally with the case (2), said camshaft drive assembly comprising at least one chain guide (7), presenting a chain guide surface (7c) and a support surface (7d), the support surface (7d) facing one of the chain guide supports (9), **characterized in that** the chain guide surface (7c), as seen in a cross-section perpendicular to a longitudinal direction of the timing chain (5) at the chain guide (7), is oriented in an angle (α) in relation to the support surface (7d).

2. A camshaft drive assembly according to claim 1, wherein the case (2) is produced with the at least one chain guide support (9) by a casting process.

3. A camshaft drive assembly according to any of the preceding claims, comprising at least one chain guide (7), mounted onto one of the chain guide supports (9) with a snapping measure.

4. A camshaft drive assembly according to any of the preceding claims, comprising a housing and an impeller for a water pump.

5. A camshaft drive assembly according to any of the preceding claims, wherein a part (10) of a water pump is formed integrally with the case (2).

6. A camshaft drive assembly according to claim 5, wherein the part (10) of the water pump comprises at least a part (11) of a volute.

7. A camshaft drive assembly according to any of the preceding claims, comprising a chain tensioning device (8), including a hydraulic actuation mechanism (8d), and at least one reservoir for oil for the hydraulic actuation mechanism (8d), wherein at least a part (16) of the oil reservoir is formed integrally with the case (2).

8. A camshaft drive assembly according to any of the preceding claims, comprising a drive sprocket, at least one cam sprocket, and a timing chain (5), whereby the drive sprocket, the cam sprocket, and the timing chain (5) are arranged in the case (2), whereby the drive sprocket and the cam sprocket are connected via the timing chain (5).

9. A camshaft drive assembly according to any of the preceding claims, wherein the chain guide (7) has an extended shape.

## Patentansprüche

1. Vorrichtung zum Antreiben einer Nockenwelle, welche ein Gehäuse (2) und wenigstens eine Kettenführungsunterstützung (9) für wenigstens eine Kettenführung (7) für eine Steuerkette (5) aufweist, wobei die Kettenführungsunterstützung (9) integral mit dem Gehäuse (2) ausgebildet ist, die Vorrichtung zum Antreiben einer Nockenwelle wenigstens eine Kettenführung (7) aufweist, die eine Kettenführungsfläche (7c) und eine Unterstützungsfläche (7d) aufweist, wobei die Unterstützungsfläche (7d) einer der Kettenführungsunterstützungen (9) zugewandt ist,
**dadurch gekennzeichnet, dass** die Kettenführungsfläche (7c), betrachtet im Querschnitt senkrecht zur Längsrichtung der Steuerkette (5) an der Kettenführung (7), in einem Winkel (α) bezüglich der Unterstützungsfläche (7d) ausgerichtet ist.

2. Vorrichtung zum Antreiben einer Nockenwelle gemäß Anspruch 1, bei der das Gehäuse (2) mit wenigstens einer Kettenführungsunterstützung (9) mittels eines Gießverfahrens hergestellt ist.

3. Vorrichtung zum Antreiben einer Nockenwelle nach einem der vorhergehenden Ansprüche, welche wenigstens eine Kettenführung (7) aufweist, die auf einer der Kettenführungsunterstützungen (9) mit einem Einschnappmittel angebracht ist.

4. Vorrichtung zum Antreiben einer Nockenwelle nach einem der vorhergehenden Ansprüche, welche ein Gehäuse und ein Flügelrad für eine Wasserpumpe aufweist.

5. Vorrichtung zum Antreiben einer Nockenwelle nach einem der vorhergehenden Ansprüche, bei der ein Teil (10) einer Wasserpumpe integral mit dem Gehäuse (2) ausgebildet ist.

6. Vorrichtung zum Antreiben einer Nockenwelle nach Anspruch 5, bei welcher der Teil (10) der Wasserpumpe wenigstens einen Teil (11) eines Diffusors aufweist.

7. Vorrichtung zum Antreiben einer Nockenwelle nach einem der vorhergehenden Ansprüche, welche eine Kettenspanneinrichtung (8), die einen hydraulischen Betätigungsmechanismus (8d) enthält, und wenigstens ein Reservoir für Öl für den hydraulischen Betätigungsmechanismus (8d) aufweist, wobei wenigstens ein Teil (16) des Ölreservoirs integral mit dem Gehäuse (2) ausgebildet ist.

8. Vorrichtung zum Antreiben einer Nockenwelle nach einem der vorhergehenden Ansprüche, welche ein Antriebskettenrad, wenigstens ein Nockenkettenrad und eine Steuerkette (5) aufweist, wobei das Antriebskettenrad, das Nockenkettenrad und die Steuerkette (5) in dem Gehäuse (2) angeordnet sind, wodurch das Antriebskettenrad und das Nockenkettenrad über die Steuerkette (5) verbunden sind.

9. Vorrichtung zum Antreiben einer Nockenwelle nach einem der vorhergehenden Ansprüche, bei der die Kettenführung (7) eine längliche Form aufweist.

## Revendications

1. Ensemble d'entraînement d'arbre à cames comprenant un carter (2) et au moins un support de guide de chaîne (9) pour au moins un guide de chaîne (7) pour une chaîne de distribution (5), lequel support de guide de chaîne (9) est formé de manière solidaire avec le carter (2), ledit ensemble d'entraînement d'arbre à cames comprenant au moins un guide de chaîne (7), présentant une surface de guide de chaîne (7c) et une surface de support (7d), la surface de support (7d) faisant face à l'un des supports de guide de chaîne (9), **caractérisé en ce que** la surface de guide de chaîne (7c), telle qu'observée sur une coupe perpendiculaire à une direction longitudinale de la chaîne de distribution (5) au niveau du guide de chaîne (7), est orientée selon un angle (α) par rapport à la surface de support (7d).

2. Ensemble d'entraînement d'arbre à cames selon la revendication 1, dans lequel le carter (2) est produit avec au moins un support de guide de chaîne (9) par un procédé de coulée.

3. Ensemble d'entraînement d'arbre à cames selon l'une quelconque des revendications précédentes, comprenant au moins un guide de chaîne (7), monté sur l'un des supports de guide de chaîne (9) avec une mesure d'encliquetage.

4. Ensemble d'entraînement d'arbre à cames selon l'une quelconque des revendications précédentes, comprenant un boîtier et une roue pour une pompe à eau.

5. Ensemble d'entraînement d'arbre à cames selon l'une quelconque des revendications précédentes, dans lequel une partie (10) d'une pompe à eau est formée de manière solidaire avec le carter (2).

6. Ensemble d'entraînement d'arbre à cames selon la revendication 5, dans lequel la partie (10) de la pompe à eau comprend au moins une partie (11) d'une volute.

7. Ensemble d'entraînement d'arbre à cames selon l'une quelconque des revendications précédentes, comprenant un dispositif de tension de chaîne (8), comprenant un mécanisme d'actionnement hydraulique (8d), et au moins un réservoir pour l'huile pour le mécanisme d'actionnement hydraulique (8d), dans lequel au moins une partie (16) du réservoir d'huile est formée de manière solidaire avec le carter (2).

8. Ensemble d'entraînement d'arbre à cames selon l'une quelconque des revendications précédentes, comprenant un pignon d'entraînement, au moins un pignon de came et une chaîne de distribution (5), moyennant quoi le pignon d'entraînement, le pignon de came et la chaîne de distribution (5) sont agencés dans le carter (2), moyennant quoi le pignon d'entraînement et le pignon de came sont raccordés via la chaîne de distribution (5).

9. Ensemble d'entraînement d'arbre à cames selon l'une quelconque des revendications précédentes, dans lequel le guide de chaîne (7) a une forme étendue.
